# EUROPEAN PATENT SPECIFICATION

(11) **EP 3 605 041 B1**
(45) Date of publication and mention of the grant of the patent: **06.12.2023**
(21) Application number: 18778112.5
(22) Date of filing: 13.03.2018
(51) Int. Cl.: G01J 1/02, G01J 5/10, G01J 5/00, G01J 5/06, G01J 5/08, G01J 5/16

(54) **INFRARED SENSOR**
INFRAROTSENSOR
CAPTEUR À INFRAROUGE

(30) Priority: 29.03.2017 JP 2017064709
(43) Date of publication of application: 05.02.2020
(73) Proprietor: Mitsubishi Materials Corporation, Chiyoda-ku Tokyo 100-8117 (JP)
(72) Inventor: NAKAMURA Kenji, Naka-shi Ibaraki 311-0102 (JP); HIRANO Shingo, Naka-shi Ibaraki 311-0102 (JP)
(74) Representative: Hoffmann Eitle
(86) International application number: PCT/JP2018/009796
(87) International publication number: WO 2018/180471

(56) References cited:
- EP-A1- 2 693 178
- WO-A1-2013/125734
- JP-A- H09 329 499
- JP-A- 2011 214 927
- JP-A- 2012 068 115
- JP-A- 2012 225 717
- JP-A- 2012 225 717
- JP-A- 2013 156 235
- JP-A- 2016 050 871
- US-A1- 2017 016 762

## Description

### BACKGROUND OF THE INVENTION

### [Field of the Invention]

The present invention relates to an infrared sensor suitable for measuring the temperature of a heating roller of a copying machine, a printer, or the like and having excellent responsiveness.

### [Description of the Related Art]

Generally, in order to measure a temperature of a measurement object such as a fixing roller used in an image forming device such as a copying machine or a printer, an infrared sensor that is disposed to face the measurement object and measures the temperature by receiving radiant heat thereof is installed.

As such infrared sensors, film-type infrared sensors in which a thin film thermistor is formed on an insulating film having excellent flexibility and which can be thinned in its entirety have been recently developed.

For example, JP 2013-160635 A discloses an infrared sensor including an insulating film, a first heat sensitive element and a second heat sensitive element that are provided to be separated from each other on one surface of the insulating film, a first electrically conductive wiring film that is formed on the one surface of the insulating film and is connected to the first heat sensitive element, a second electrically conductive wiring film that is connected to the second heat sensitive element, and an infrared reflection film that faces the second heat sensitive element and is provided on the other surface of the insulating film.

Similar sensors are shown in JP 2012-225717 A, EP 2 693 178 A1 and
JP 2012-068115 A.

### SUMMARY OF THE INVENTION

### [Problems to be solved by the Invention]

The following problems remain in the conventional technique mentioned above.

That is, in the infrared sensors in the conventional infrared sensor, an infrared reflection film is formed to face a heat sensitive element on a compensation side. However, since the infrared reflection film expands on the entire surface on the compensation side and also faces a wiring film connected to the heat sensitive element on the compensation side, there is a disadvantage in that heat conducted from a detection side to the compensation side is transferred from the infrared reflection film to the wiring film on the compensation side and escapes to the outside from a terminal electrode connected to the wiring film on the compensation side. Particularly, unevenness in wiring length or wiring width of a wiring film is one influential factor related to a temperature difference between a light receiving side and the compensation side, and the influence of heat escaping from the infrared reflection film to the wiring film on the compensation side and the terminal electrode also changes due to the unevenness, and thus there is concern that an error may occur in a detected temperature.

The present invention has been made in consideration of the foregoing problems, and an object thereof is to provide an infrared sensor in which escape of heat from an infrared reflection film to a wiring on a compensation side can be curbed and high accuracy can be achieved.

### [Means for Solving the Problems]

The present invention employs the following configuration in order to solve the foregoing problems. That is, according to a first aspect of the present invention comprises: an insulating film, a pair of first terminal electrodes and a pair of second terminal electrodes that are formed by patterning on one surface of the insulating film, a first heat sensitive element and a second heat sensitive element that are provided on the one surface of the insulating film, a pair of first pattern wirings that are formed by patterning on the one surface of the insulating film with one ends thereof being connected to the first heat sensitive element and the other ends thereof being connected to the pair of first terminal electrodes, a pair of second pattern wirings that are formed by patterning on the one surface of the insulating film with one ends thereof being connected to the second heat sensitive element and the other ends thereof being connected to the pair of second terminal electrodes, a light receiving region that is provided on the other surface of the insulating film and faces the first heat sensitive element, and an infrared reflection film formed on the other surface of the insulating film so as to cover at least a region facing the second heat sensitive element while avoiding the light receiving region, wherein the infrared reflection film expands around the region facing the second heat sensitive element while avoiding a region facing the pair of second pattern wirings, and wherein cut portions are respectively formed in regions of the infrared reflection film facing the pair of second pattern wirings such that the infrared reflection film is partially removed.

In this infrared sensor, since the infrared reflection film expands around the region facing the second heat sensitive element while avoiding the region facing the pair of second pattern wirings, no infrared reflection film is formed in a part facing the second pattern wirings on a compensation side, and thus escape of heat from the infrared reflection film to the second pattern wirings can be curbed. In addition, since no infrared reflection film is formed in the part facing the second pattern wirings, the influence caused by a change in wiring length or wiring width is offset by the first pattern wirings and the second pattern wirings, the overall influence can be curbed, and detection can be performed with high accuracy.

An infrared sensor according to a second aspect of the present invention is characterized by the infrared sensor according to the first aspect of the present invention, wherein the infrared reflection film expands to a region facing a region between the pair of second terminal electrodes while avoiding a region facing the pair of second terminal electrodes.

That is, in this infrared sensor, since the infrared reflection film expands to the region facing the region between the pair of second terminal electrodes while avoiding the region facing the pair of second terminal electrodes, escape of heat from the infrared reflection film to the second terminal electrode on the compensation side can also be curbed. In addition, since the infrared reflection film expands to the region facing the region between the pair of second terminal electrodes, infrared light can be reflected within a wide range on the compensation side.

An infrared sensor according to a third aspect of the present invention is characterized by the infrared sensor according to the first or second aspect of the present invention, wherein the infrared reflection film has a thermal coupling portion close to a part of the first pattern wirings.

That is, in this infrared sensor, since the infrared reflection film has the thermal coupling portion close to a part of the first pattern wirings, the thermal coupling portion is thermally coupled to a part of the first pattern wirings so that a change in environmental temperature can be efficiently transmitted mutually between a light receiving side and the compensation side, and convergence of the heat balance between the light receiving side and the compensation side is accelerated, and thus, the heat responsiveness is improved. Since the insulating film is thin, heat on one surface is rapidly transmitted to the infrared reflection film on the opposite surface via the thermal coupling portion. Particularly, when the infrared reflection film is a metal film, heat is transmitted mutually between the light receiving side and the compensation side with high heat conductivity to achieve rapid convergence of the heat balance. In addition, since heat transmitted to the infrared reflection film via the thermal coupling portion is unlikely to escape to the second pattern wirings on the compensation side, convergence of the heat balance can be further accelerated.

An infrared sensor according to a fourth aspect of the present invention is characterized by the infrared sensor according to any one of the first to third aspects of the present invention, wherein the infrared reflection film is formed to cover an area around the light receiving region.

That is, in this infrared sensor, since the infrared reflection film is formed to cover an area around the light receiving region, a change in environmental temperature transmitted via the thermal coupling portion is also transmitted to the entire area around the light receiving region, so that convergence of the heat balance can be further accelerated. Therefore, a temperature gradient due to air convection between the first heat sensitive element side and the second heat sensitive element side is reduced, so that the response speeds of the two heat sensitive elements can be equivalent to each other. Particularly, since heat is unlikely to escape from the infrared reflection film to the second pattern wirings on the compensation side, heat of the infrared reflection film is more likely to be transmitted to the entire area around the light receiving region.

### [Effects of the Invention]

According to the present invention, the following effects are achieved.

That is, according to the infrared sensor of the present invention, since the infrared reflection film expands around the region facing the second heat sensitive element while avoiding the region facing the pair of second pattern wirings, escape of heat from the infrared reflection film to the second pattern wiring can be curbed. Therefore, in the infrared sensor of the present invention, the influence caused by a change in wiring length or wiring width can also be curbed and detection can be performed with high accuracy, so that the infrared sensor is suitable for measuring a temperature of a heating roller of a copying machine, a printer, or the like.

### BRIEF DESCRIPTION OF THE DRAWINGS

Fig. 1 is a plan view showing a first embodiment of an infrared sensor according to the present invention.
Fig. 2 is a plan view (Fig. 2(a)) and a back view (Fig. 2(b)) both showing the infrared sensor in a state where heat sensitive elements are removed in the first embodiment.
Fig. 3 is a plan view showing a second embodiment of an infrared sensor according to the present invention.
Fig. 4 is a plan view (Fig. 4(a)) and a back view (Fig. 4(b)) both showing the infrared sensor in a state where heat sensitive elements are removed in the second embodiment.

### DESCRIPTION OF THE EMBODIMENTS

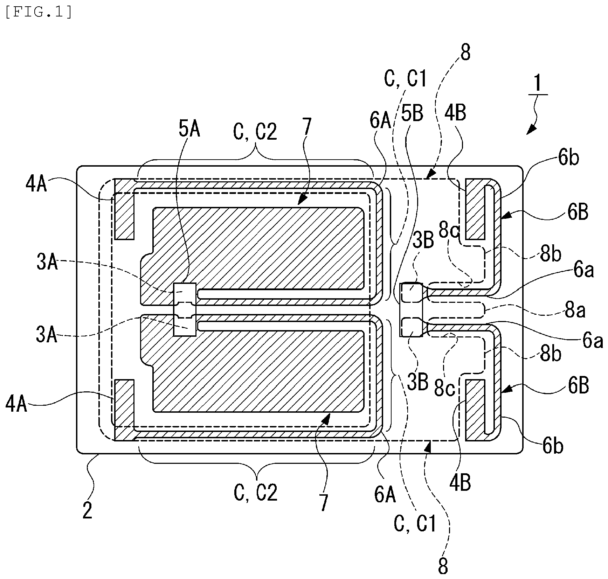

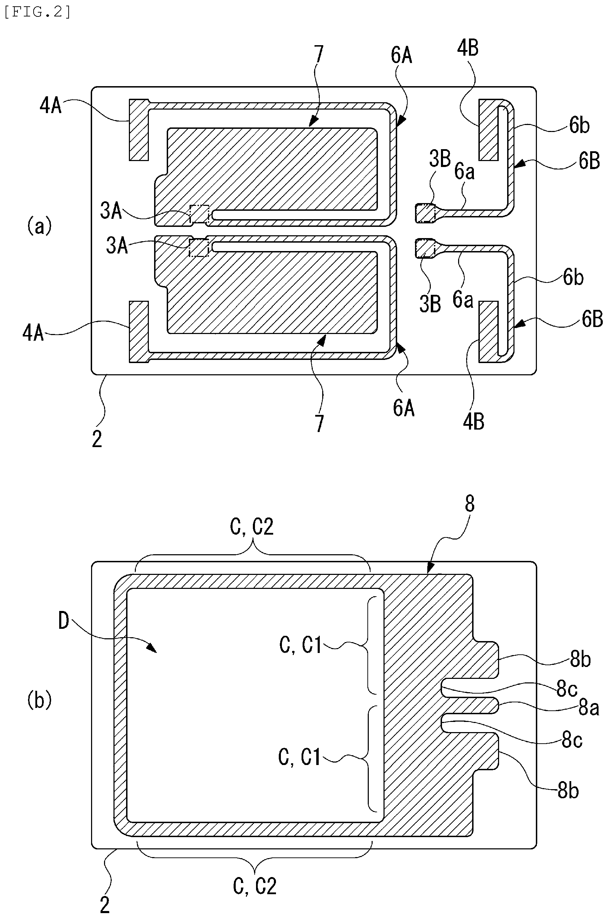

Hereinafter, a first embodiment of an infrared sensor according to the present invention will be described with reference to Figs. 1 and 2.

As illustrated in Figs. 1 and 2, an infrared sensor 1 of the present embodiment includes an insulating film 2, a pair of first terminal electrodes 4A and a pair of second terminal electrodes 4B that are formed by patterning on one surface (front surface) of the insulating film 2, a first heat sensitive element 5A and a second heat sensitive element 5B that are provided on the one surface of the insulating film 2, a pair of first pattern wirings 6A that are formed by patterning on the one surface of the insulating film 2 with one ends thereof being connected to the first heat sensitive element 5A and the other ends thereof being connected to the pair of first terminal electrodes 4A, a pair of second pattern wirings 6B that are formed by patterning on the one surface of the insulating film 2 with one ends thereof being connected to the second heat sensitive element 5B and the other ends thereof being connected to the pair of second terminal electrodes 4B, a light receiving region D that is provided on the other surface (surface on a light receiving side, back surface) of the insulating film 2 and faces the first heat sensitive element 5A, and an infrared reflection film 8 formed on the other surface of the insulating film 2 so as to cover at least a region facing the second heat sensitive element 5B while avoiding the light receiving region D.

The infrared reflection film 8 expands around the region facing the second heat sensitive element 5B while avoiding a region facing the pair of second pattern wirings 6B (immediately below the pair of second pattern wirings 6B).

In addition, the infrared reflection film 8 expands to a region facing a region between the pair of second terminal electrodes 4B while avoiding a region facing the pair of second terminal electrodes 4B (immediately below the pair of second terminal electrodes 4B).

The pair of second pattern wirings 6B have a pair of second adhesive electrodes 3B of which one ends are connected to the second heat sensitive element 5B, a pair of first extending portions 6a of which one ends are connected to the pair of second adhesive electrodes 3B and which extend parallel to each other, and second extending portions 6b which extend from the other ends of the pair of first extending portions 6a to the pair of second terminal electrodes 4B along the short sides of the insulating film 2.

That is, the infrared reflection film 8 has an inter-wiring extending portion 8a extending immediately below a region between the pair of first extending portions 6a parallel to each other, and a pair of terminal side protruding portions 8b protruding while expanding between the pair of second terminal electrodes 4B and the pair of first extending portions 6a. The terminal side protruding portions 8b protrude while expanding to the region facing the region between the pair of second terminal electrodes 4B. Cut portions 8c are respectively formed between the inter-wiring extending portion 8a and the pair of terminal side protruding portions 8b in a region facing the pair of second pattern wirings 6B such that the infrared reflection film 8 is partially removed.

In addition, the infrared sensor 1 of the present embodiment includes a pair of heat conductive films 7 which are connected to a pair of first adhesive electrodes 3A separately from the first pattern wirings 6A and are formed by patterning of thin films having higher heat conductivity than the insulating film 2 near the first adhesive electrodes 3A on the one surface of the insulating film 2.

The infrared reflection film 8 is formed to avoid a region facing the pair of heat conductive films 7.

That is, in the present embodiment, the first heat sensitive element 5A disposed to face a light receiving surface of infrared light serves as an infrared light detecting element, and the second heat sensitive element 5B disposed to face the infrared reflection film 8 serves as a compensation element.

In Fig. 1, the infrared reflection film 8 on the back surface side is shown with a broken line. In addition, in (a) and (b) of FIG. 2, each of the terminal electrodes, each of the pattern wirings, the heat conductive films 7, and the infrared reflection film 8 are shown by hatching.

The infrared reflection film 8 has a thermal coupling portion C close to a part of the first pattern wirings 6A.

The thermal coupling portion C is a part for being thermally coupled to the part of the first pattern wirings 6A and is formed to face the part of the first pattern wirings 6A.

The pair of first pattern wirings 6A have the pair of first adhesive electrodes 3A of which one ends are connected to the first heat sensitive element 5A.

The first pattern wirings 6A extend to an area near the second heat sensitive element 5B. In addition, the thermal coupling portion C has a compensation-side-vicinity coupling portions C1 facing a part of the first pattern wirings 6A extending to an area near the second heat sensitive element 5B.

In addition, the first pattern wirings 6A further extend to a region near an outer edge of the insulating film 2. In addition, the thermal coupling portion C has an outer-edge-vicinity coupling portions C2 facing the first pattern wirings 6A in the region near the outer edge.

Moreover, the infrared reflection film 8 is formed to cover an area around the light receiving region D.

In this manner, the pair of first pattern wirings 6A extend from the pair of first adhesive electrodes 3A toward a side opposite to the pair of first terminal electrodes 4A side, further extend along a part of the outer circumferences of the pair of heat conductive films 7, and reach the corresponding first terminal electrodes 4A.

That is, the first pattern wirings 6A first extend from the first adhesive electrodes 3A toward the second heat sensitive element 5B between the pair of heat conductive films 7 and extend toward the long sides in directions along the short sides of the insulating film 2 near end portions of the pair of heat conductive films 7.

Parts of the infrared reflection film 8 on the compensation side are formed to face the extending parts and serve as the compensation-side-vicinity coupling portions C1. Moreover, the first pattern wirings 6A extend to the first terminal electrodes 4A along the long sides of the insulating film 2 on the outer side of the heat conductive films 7. The infrared reflection film 8 extends to an area near the outer edge of the insulating film 2 while facing the extending parts and these parts serve as the outer-edge-vicinity coupling portions C2.

The second pattern wirings 6B extend at shorter distances than the first pattern wirings 6A and reach the second terminal electrodes 4B.

Terminal electrodes of the first heat sensitive element 5A and the second heat sensitive element 5B are bonded to the corresponding first adhesive electrodes 3A and the second adhesive electrodes 3B, respectively, with a conductive adhesive such as solder.

The insulating film 2 is formed of a polyimide resin sheet in a substantially rectangular shape. The infrared reflection film 8, each of the pattern wirings, each of the terminal electrodes, each of the adhesive electrodes, and the heat conductive films 7 are formed of copper foil. That is, they are produced by a double-sided flexible substrate in which the infrared reflection film 8, each of the pattern wirings, each of the terminal electrodes, each of the adhesive electrodes, and the heat conductive films 7 are formed by patterning with copper foil on both sides of a polyimide substrate serving as the insulating film 2.

The pair of first terminal electrodes 4A and the pair of second terminal electrodes 4B are arranged near corners of the insulating film 2.

The infrared reflection film 8 is formed of the copper foil described above and a gold plating film laminated on the copper foil.

The infrared reflection film 8 is formed of a material having a higher infrared reflectance than the insulating film 2 and is formed by applying the gold plating film on the copper foil, as described above. In addition to the gold plating film, for example, an aluminum deposition film with mirror surface, an aluminum foil, or the like may be used.

The first heat sensitive element 5A and the second heat sensitive element 5B are chip thermistors having terminal electrodes (not illustrated) formed at both end portions thereof. The thermistors can be NTC-type, PTC-type, or CTR-type thermistors, and, in the present embodiment, for example, NTC-type thermistors are employed as the first heat sensitive element 5A and the second heat sensitive element 5B. The thermistors are formed of a thermistor material such as a Mn-Co-Cu-based material or a Mn-Co-Fe-based material.

As described above, in the infrared sensor 1 of the present embodiment, since the infrared reflection film 8 expands around the region facing the second heat sensitive element 5B while avoiding the region facing the pair of second pattern wirings 6B, no infrared reflection film 8 is formed in a part facing the second pattern wirings 6B on the compensation side, and thus escape of heat from the infrared reflection film 8 to the second pattern wirings 6B can be curbed.

In addition, since no infrared reflection film 8 is formed in the part facing the second pattern wirings 6B, the influence caused by a change in wiring length or wiring width is offset by the first pattern wirings 6A and the second pattern wirings 6B, the overall influence can be curbed, and detection can be performed with high accuracy.

That is, the influence of unevenness in wiring length or wiring width of a wiring film can be offset by causing the influence to act similarly on a detection side and the compensation side. Heat on the insulating film 2 is transmitted to four terminal electrodes 4A and 4B in total. In this case, the heat resistance to the terminal electrodes 4A and 4B is determined by the wiring width and the inter-wiring distance. However, a certain extent of unevenness occurs in the wiring width or the inter-wiring distance due to manufacturing constraints, such as etching, and this appears as unevenness in a characteristic (sensitivity).

Therefore, when the infrared reflection film 8 and the second pattern wirings 6B are disposed to face each other, in comparison between the structures on the detection side and the compensation side, the detection side is connected to the first terminal electrodes 4A through the thin first pattern wirings 6A. In contrast, the compensation side is indirectly connected to the second terminal electrodes 4B via the insulating film 2 even in the infrared reflection film 8 on the opposite surface. Since this is actually the same situation as being thermally connected to each other through a surface, some degree of unevenness in wiring width does not affect the heat resistance. That is, manufacturing unevenness significantly affects only the detection side, and since the characteristic (sensitivity) is the difference between the detection side and the compensation side, manufacturing unevenness directly appears in the characteristic.

In contrast, in the present embodiment, since no infrared reflection film 8 is formed in the part facing the second pattern wirings 6B, the characteristic (difference between the detection side and the compensation side) is offset by causing the compensation side to be connected to the second terminal electrodes 4B through a line instead of a surface such that the compensation side is affected in the same manner as the detection side. When the heat conductive films 7, the wirings 6A and 6B, and the infrared reflection film 8 on the front and back surfaces of the insulating film 2 are superposed each other, "heat conductive films 7-heat sensitive element 5A-wirings 6A-terminal electrodes 4A" on the detection side and "infrared reflection film 8-heat sensitive element 5B-wirings 6B-terminal electrodes 4B" on the compensation side have shapes similar to each other. This results in the effect of offsetting the unevenness in wiring width.

In addition, since the infrared reflection film 8 expands to the region facing the region between the pair of second terminal electrodes 4B while avoiding a region facing the pair of second terminal electrodes 4B, escape of heat from the infrared reflection film 8 to the second terminal electrodes 4B on the compensation side can also be curbed. In addition, since the infrared reflection film 8 expands to the region facing the region between the pair of second terminal electrodes 4B, infrared light can be reflected within a wide range on the compensation side.

In addition, since the infrared reflection film 8 has the thermal coupling portion C close to a part of the first pattern wirings 6A, the thermal coupling portion C is thermally coupled to a part of the first pattern wirings 6A so that a change in environmental temperature can be efficiently transmitted mutually between the light receiving side and the compensation side, and convergence of the heat balance between the light receiving side and the compensation side is accelerated, and thus, the heat responsiveness is improved. Since the insulating film 2 is thin, heat on one surface is promptly transmitted to the infrared reflection film 8 on the opposite surface via the thermal coupling portion C. Particularly, when the infrared reflection film is a metal film, heat is transmitted mutually between the light receiving side and the compensation side with high heat conductivity to achieve rapid convergence of the heat balance. In addition, since heat transmitted to the infrared reflection film 8 via the thermal coupling portion C is unlikely to escape to the second pattern wirings 6B on the compensation side, convergence of the thermal balance can be further accelerated.

Moreover, since the infrared reflection film 8 is formed to cover an area around the light receiving region D, a change in environmental temperature transmitted via the thermal coupling portion C is also transmitted to the entire area around the light receiving region D, so that convergence of the thermal balance can be further accelerated. Therefore, a temperature gradient due to air convection between the first heat sensitive element 5A side and the second heat sensitive element 5B side is reduced, so that response speeds of the two heat sensitive elements can be equivalent to each other. Particularly, since heat is unlikely to escape from the infrared reflection film 8 to the second pattern wirings 6B on the compensation side, heat of the infrared reflection film 8 is more likely to be transmitted to the entire area around the light receiving region D.

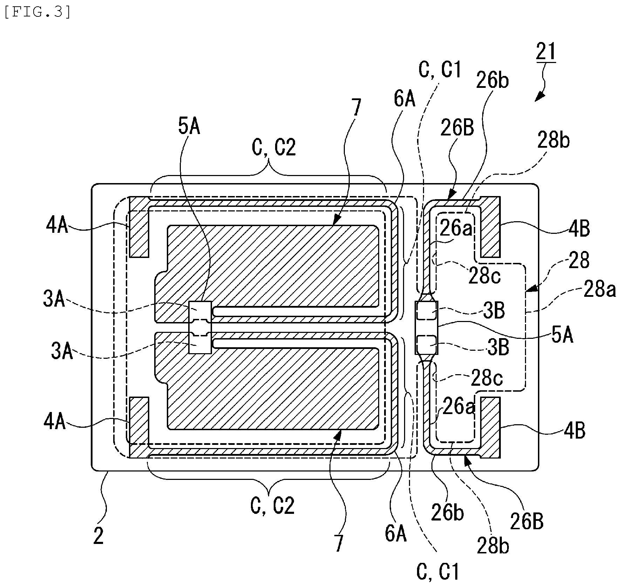

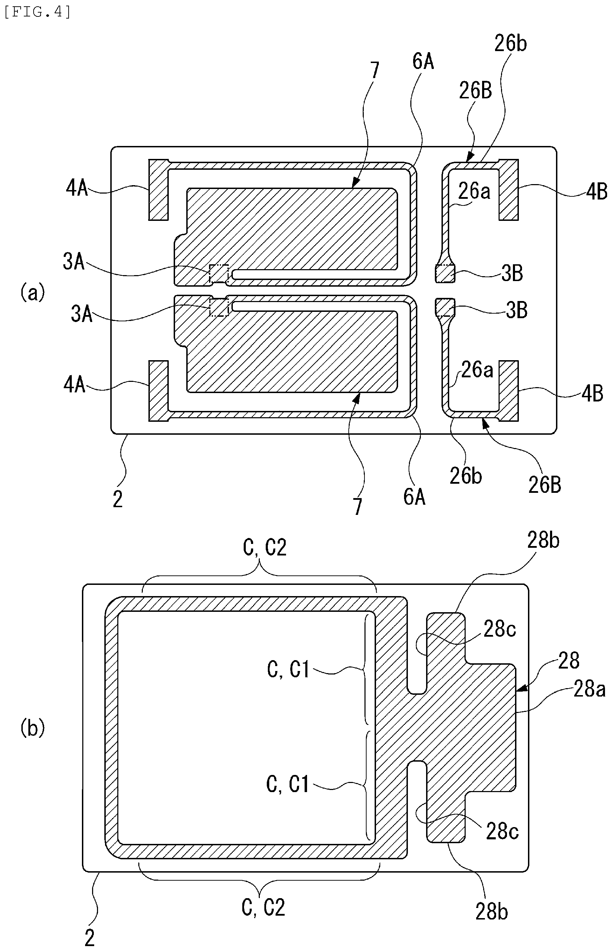

Next, a second embodiment of the infrared sensor according to the present invention will be described below with reference to Figs. 3 and 4. In the following description of each embodiment, the same components as those described in the above embodiment are denoted by the same reference numerals, and the description there of will be omitted. In addition, in Fig. 3, the infrared reflection film 28 formed on the opposite surface of the insulating film 2 is shown with a broken line.

A difference between the second embodiment and the first embodiment is that the pair of second pattern wirings 6B in the first embodiment have the pair of first extending portions 6a parallel to each other and a pair of second extending portions 6b extending along the short sides of the insulating film 2, and the infrared reflection film 8 expands to the compensation side while avoiding the areas immediately therebelow. In contrast, in an infrared sensor 21 of the second embodiment, as shown in Figs. 3 and 4, a pair of second pattern wirings 26B have a pair of first extending portions 26a extending in directions opposite to each other and a pair of second extending portions 26b extending along the long sides of the insulating film 2, and the infrared reflection film 28 expands to the compensation side while avoiding the areas immediately therebelow.

In the second embodiment, the pair of first extending portions 26a extend from the second adhesive electrodes 3B in directions opposite to each other along the short sides of the insulating film 2, and the pair of second extending portions 26b extend to an area near the long sides of the insulating film 2.

That is, the infrared reflection film 28 has a first protruding portion 28a protruding to an area immediately below the region between the pair of second terminal electrodes 4B, and a pair of second protruding portions 28b protruding between the first extending portions 26a, the second extending portions 26b and the second terminal electrodes 4B. Cut portions 28c are respectively formed in regions facing the pair of first extending portions 26a, and the infrared reflection film 28 is partially removed.

As described above, in the infrared sensor 21 of the second embodiment, similar to the first embodiment, since the infrared reflection film 28 expands around the region facing the second heat sensitive element 5B while avoiding a region facing the pair of second pattern wirings 26B, no infrared reflection film 28 is formed in a part facing the second pattern wirings 26B on the compensation side, and thus, escape of heat from the infrared reflection film 28 to the second pattern wirings 26B can be curbed.

The technical scope of the present invention is not limited to the foregoing embodiments, and various modifications can be made without departing from the scope of the present invention, as defined by the claims.

For example, in the foregoing embodiments, the first heat sensitive element detects heat conducted from the insulating film which has directly absorbed infrared light. However, an infrared absorbing film having higher infrared absorbance than the insulating film may be formed immediately below the first heat sensitive element and on one surface of the insulating film. In this case, the effect of the first heat sensitive element absorbing infrared light is further improved, and a more favorable temperature difference between the first heat sensitive element and the second heat sensitive element can be obtained. That is, this infrared absorbing film may be caused to absorb infrared light of radiation from a measurement object such that the temperature of the first heat sensitive elements facing each other changes due to the heat conducted via the insulating film from the infrared absorbing film which has absorbed infrared light to radiate heat.

### [Reference Numerals]

1, 21: infrared sensor, 2: insulating film, 3A: first adhesive electrode, 3B: second adhesive electrode: 4A: first terminal electrode, 4B: second terminal electrode, 5A: first heat sensitive element, 5B: second heat sensitive element, 6A: first pattern wiring, 6B, 26B: second pattern wiring, 8, 28: infrared reflection film, C: thermal coupling portion, D: light receiving region

## Claims

1. An infrared sensor (1, 21) comprising:
an insulating film (2);
a pair of first terminal electrodes (4A) and a pair of second terminal electrodes (4B) that are formed by patterning on one surface of the insulating film (2);
a first heat sensitive element (5A) and a second heat sensitive element (5B) that are provided on the one surface of the insulating film (2);
a pair of first pattern wirings (6A) that are formed by patterning on the one surface of the insulating film (2) with one ends thereof being connected to the first heat sensitive element (5A) and the other ends thereof being connected to the pair of first terminal electrodes (4A);
a pair of second pattern wirings (6B, 26B) that are formed by patterning on the one surface of the insulating film (2) with one ends thereof being connected to the second heat sensitive element (5B) and the other ends thereof being connected to the pair of second terminal electrodes (4B);
a light receiving region (D) that is provided on the other surface of the insulating film (2) and faces the first heat sensitive element (5A); and
an infrared reflection film (8, 28) formed on the other surface of the insulating film (2) so as to cover at least a region facing the second heat sensitive element (5B) while avoiding the light receiving region (D),
wherein the infrared reflection film (8, 28) expands around the region facing the second heat sensitive element (5B) while avoiding a region facing the pair of second pattern wirings (6B, 26B), and
wherein cut portions (8c) are respectively formed in regions of the infrared reflection film (8, 28) facing the pair of second pattern wirings (6B, 26B) such that the infrared reflection film (8, 28) is partially removed.

2. The infrared sensor (1, 21) according to claim 1,
wherein the infrared reflection film (8, 28) expands to a region facing a region between the pair of second terminal electrodes (4B) while avoiding a region facing the pair of second terminal electrodes (4B).

3. The infrared sensor (1, 21) according to claim 1,
wherein the infrared reflection film (8, 28) has a thermal coupling portion (C) close to a part of the first pattern wirings (6A).

4. The infrared sensor (1, 21) according to claim 1,
wherein the infrared reflection film (8, 28) is formed to cover an area around the light receiving region (D) .

## Patentansprüche

1. Infrarotsensor (1, 21), umfassend:
eine isolierende Folie (2);
ein Paar von ersten Anschlusselektroden (4A) und ein Paar von zweiten Anschlusselektroden (4B), die durch Strukturieren auf einer Fläche der isolierenden Folie (2) gebildet sind;
ein erstes wärmeempfindliches Element (5A) und ein zweites wärmeempfindliches Element (5B), die auf der einen Fläche der isolierenden Folie (2) bereitgestellt sind;
ein Paar von ersten Strukturverdrahtungen (6A), die durch Strukturieren auf der einen Fläche der isolierenden Folie (2) gebildet sind, wobei deren eine Enden mit dem ersten wärmeempfindlichen Element (5A) verbunden sind und deren andere Enden mit dem Paar von ersten Anschlusselektroden (4A) verbunden sind;
ein Paar von zweiten Strukturverdrahtungen (6B, 26B), die durch Strukturieren auf der einen Fläche der isolierenden Folie (2) gebildet sind, wobei deren eine Enden mit dem zweiten wärmeempfindlichen Element (5B) verbunden sind und deren andere Enden mit dem Paar von zweiten Anschlusselektroden (4B) verbunden sind;
eine Lichtempfangsregion (D), die auf der anderen Fläche der isolierenden Folie (2) bereitgestellt ist und dem ersten wärmeempfindlichen Element (5A) zugewandt ist; und
eine infrarotreflektierende Folie (8, 28), die auf der anderen Fläche der isolierenden Folie (2) gebildet ist, um mindestens eine Region zu bedecken, die dem zweiten wärmeempfindlichen Element (5B) zugewandt ist, während die Lichtempfangsregion (D) gemieden wird,
wobei sich die infrarotreflektierende Folie (8, 28) um die Region herum ausdehnt, die dem zweiten wärmeempfindlichen Element (5B) zugewandt ist, während eine Region gemieden wird, die dem Paar von zweiten Strukturverdrahtungen (6B, 26B) zugewandt ist, und
wobei geschnittene Abschnitte (8c) jeweils in Regionen der infrarotreflektierenden Folie (8, 28) gebildet sind, die dem Paar von zweiten Strukturverdrahtungen (6B, 26B) zugewandt sind, sodass die infrarotreflektierende Folie (8, 28) teilweise entfernt ist.

2. Infrarotsensor (1, 21) nach Anspruch 1,
wobei sich die infrarotreflektierende Folie (8, 28) auf eine Region ausdehnt, die einer Region zwischen dem Paar von zweiten Anschlusselektroden (4B) zugewandt ist, während eine Region gemieden wird, die dem Paar von zweiten Anschlusselektroden (4B) zugewandt ist.

3. Infrarotsensor (1, 21) nach Anspruch 1,
wobei die infrarotreflektierende Folie (8, 28) einen thermischen Kopplungsabschnitt (C) nahe einem Teil der ersten Strukturverdrahtungen (6A) aufweist.

4. Infrarotsensor (1, 21) nach Anspruch 1,
wobei die infrarotreflektierende Folie (8, 28) gebildet ist, um einen Bereich um die Lichtempfangsregion (D) herum zu bedecken.

## Revendications

1. Capteur à infrarouge (1, 21) comprenant :
un film isolant (2) ;
une paire de premières électrodes terminales (4A) et une paire de deuxièmes électrodes terminales (4B) qui sont formées par formation de motifs sur une surface du film isolant (2) ;
un premier élément sensible à la chaleur (5A) et un deuxième élément sensible à la chaleur (5B) qui sont prévus sur la surface du film isolant (2) ;
une paire de premiers câblages à motifs (6A) qui sont formés par formation de motifs sur la surface du film isolant (2) avec une extrémité de ceux-ci étant connectée au premier élément sensible à la chaleur (5A) et l'autre extrémité de ceux-ci étant connectée à la paire de premières électrodes terminales (4A) ;
une paire de deuxièmes câblages à motifs (6B, 26B) qui sont formés par formation de motifs sur la surface du film isolant (2) avec une extrémité de ceux-ci étant connectée au deuxième élément sensible à la chaleur (5B) et l'autre extrémité de ceux-ci étant connectée à la paire de deuxièmes électrodes terminales (4B) ;
une région de réception de lumière (D) qui est prévue sur l'autre surface du film isolant (2) et fait face au premier élément sensible à la chaleur (5A) ; et
un film de réflexion infrarouge (8, 28) formé sur l'autre surface du film isolant (2) de façon à couvrir au moins une région faisant face au deuxième élément sensible à la chaleur (5B) tout en évitant la région de réception de lumière (D),
dans lequel le film de réflexion infrarouge (8, 28) se dilate autour de la région faisant face au deuxième élément sensible à la chaleur (5B) tout en évitant une région faisant face à la paire de deuxièmes câblages à motifs (6B, 26B), et
dans lequel des portions découpées (8c) sont respectivement formées dans des régions du film de réflexion infrarouge (8, 28) faisant face à la paire de deuxièmes câblages à motifs (6B, 26B) de telle manière que le film de réflexion infrarouge (8, 28) est partiellement éliminé.

2. Capteur à infrarouge (1, 21) selon la revendication 1,
dans lequel le film de réflexion infrarouge (8, 28) se dilate vers une région faisant face à une région entre la paire de deuxièmes électrodes terminales (4B) tout en évitant une région faisant face à la paire de deuxièmes électrodes terminales (4B).

3. Capteur à infrarouge (1, 21) selon la revendication 1,
dans lequel le film de réflexion infrarouge (8, 28) a une portion de couplage thermique (C) près d'une partie des premiers câblages à motifs (6A).

4. Capteur à infrarouge (1, 21) selon la revendication 1,
dans lequel le film de réflexion infrarouge (8, 28) est formé pour couvrir une aire autour de la région de réception de lumière (D).
